(19) Europäisches Patentamt
European Patent Office
Office européen des brevets

(11) **EP 4 567 839 A2**

(12) **EUROPEAN PATENT APPLICATION**

(43) Date of publication:
**11.06.2025 Bulletin 2025/24**

(21) Application number: **25170685.9**

(22) Date of filing: **15.04.2025**

(51) International Patent Classification (IPC):
*H01F 1/057* (2006.01)   *H01F 41/02* (2006.01)

(52) Cooperative Patent Classification (CPC):
**H01F 41/0293; H01F 1/0577**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.12.2024 CN 202411991229**

(71) Applicant: **Baotou Tianhe Magnetics Technology Co., Ltd.**
**Baotou, Inner Mongolia 014030 (CN)**

(72) Inventors:
- **DONG, Yi**
  **Baotou, 014030 (CN)**
- **YU, Long**
  **Baotou, 014030 (CN)**
- **LIN, Xiaoqin**
  **Baotou, 014030 (CN)**
- **DIAO, Shulin**
  **Baotou, 014030 (CN)**
- **WU, Zhimin**
  **Baotou, 014030 (CN)**
- **WU, Shujie**
  **Baotou, 014030 (CN)**
- **HU, Zhanjiang**
  **Baotou, 014030 (CN)**
- **CHEN, Jihong**
  **Baotou, 014030 (CN)**
- **ZHOU, Mingchen**
  **Baotou, 014030 (CN)**
- **YUAN, Yi**
  **Baotou, 014030 (CN)**
- **CHEN, Ya**
  **Baotou, 014030 (CN)**
- **YUAN, Wenjie**
  **Baotou, 014030 (CN)**

(74) Representative: **Engelhard, Markus**
**Boehmert & Boehmert**
**Anwaltspartnerschaft mbB**
**Pettenkoferstrasse 22**
**80336 München (DE)**

(54) **RARE EARTH PERMANENT MAGNETS AND METHODS OF MANUFACTURING THE SAME, AND ELECTRIC MOTORS**

(57) The present disclosure provides a rare earth permanent magnet and a method of manufacturing the same, and also provides an electric motor. The the rare earth permanent magnet is of a cuboid structure with length, width, and height, wherein when a direction of the height is defined as an H direction, which is the easy axis of magnetization of the rare earth permanent magnet, and a direction of the width is defined as a W direction; and when the cuboid structure has a surface A1 and a surface An that are parallel to each other and formed by the length and the height of the cuboid structure, and a plurality of cross-sections Ai parallel to the surface A1 exist between the surface A1 and the surface An, of which the cross-section located at the central axis of the cuboid structure is denoted as Aj, then the coercivity $H_{cj}$ decreases from the surface A1 to the cross-section Aj in the W direction, and the coercivity $H_{cj}$ decreases from the surface An to the cross-section Aj in the W direction; wherein when the coercivity at a certain point D1 on the surface A1 is denoted as $H1$; and when a line extended from the point D1 in the W direction intersects the cross-section Aj at a point E1, and the coercivity at the point E1 is denoted as $H1'$, then it follows that $H1 - H1' > 80$ kA/m. The rare earth permanent magnet is superior in resistance to demagnetization.

FIG. 5

**Description**

**TECHNICAL FIELD OF THE DISCLOSURE**

The present disclosure relates to a rare earth permanent magnet and a method of manufacturing the same, and to an electric motor comprising the rare earth permanent magnet.

**BACKGROUND OF THE DISCLOSURE**

Sintered R-Fe-B rare-earth magnets that have $R_2Fe_{14}B$ as the main phase are high-performance ones among permanent magnets. They are primarily used in voice coil motors for hard disk drives, motors for hybrid vehicles, and various household appliances.

The demagnetization resistance of an electric motor refers to its capability to withstand the influence of external magnetic fields during its operation. Generally speaking, the stronger the demagnetization resistance of a motor, the more stable and reliable the motor is. The level of demagnetization resistance of a motor is closely correlated with the material of which the motor is made up. For instance, in the case of permanent magnet motors, the coercivity of the permanent magnet material is an important factor affecting their demagnetization resistance.

The edges and corners of a magnet are typically most prone to demagnetization in the actual operation of the electric motor. Some studies focus solely on increasing the coercivity by diffusing heavy rare earths over the edge and corner regions of a magnet with a view to reducing the amount of use of the heavy rare earths and improving the cost-performance ratio of the products. However, the overall coercivity of magnets produced in this manner is low, with the result that their demagnetization resistance still needs improvement.

CN113506665A discloses a method for efficiently enhancing the coercivity of NdFeB magnets through diffusion, which involves coating the edges of a NdFeB magnet with a grain boundary diffusion agent containing a heavy rare earth, a light rare earth, or no rare earth, and subjecting the magnet to heat treatment. However, the coercivity of the magnet obtained by this method still needs to be increased.

CN117497276A discloses an R-T-Ga-B rare earth permanent magnet based on region-selected grain boundary diffusion and a method of preparing the same. The preparation method comprises: performing a region-selected coating of a diffusion source on a diffusion surface of an NdFeB magnet substrate by applying the diffusion source to the edge and corner regions of the diffusion surface without applying the diffusion source to the non-edge and non-corner regions of the diffusion surface, wherein the diffusion source is mixed dry powder of a heavy rare earth and the metal Ga; and performing diffusion treatment to obtain a R-T-Ga-B rare earth permanent magnet based on region-selected grain boundary diffusion.

CN115602402A discloses a rare earth permanent magnet and a method of preparing the same. The rare earth permanent magnet comprises an outer surface P1 and an adhesive surface P2 opposite to the outer surface P1. When the coercivity of a central portion a1 of the outer surface P1 is set as $H_{a1}$, and the coercivity of a central portion a2 of the adhesive surface P2 is set as $H_{a2}$, the rare earth permanent magnet satisfies $H_{a1} > H_{a2}$. When a Cartesian coordinate system is established with a2 as the origin, with the length direction of the surface P2 as the X-axis, and with the width direction of the surface P2 as the Y-axis, the coercivity at a position b1 (0, -Y) on the edge of the surface P1 is set as $H_{b1}$, the coercivity at a position c1 (X, -Y) on the edge of the surface P1 is set as $H_{c1}$, and the coercivity at a position d1 (X, 0) on the edge of the surface P1 is set as $H_{d1}$, the rare earth permanent magnet satisfies the following: the value of Y is less than that of X, $H_{a1} \approx H_{b1}$, $H_{a1} < H_{c1}$, and $H_{a1} < H_{d1}$. To obtain this rare earth permanent magnet, it is necessary to perform coating two or more times. Thus, the preparation method is complex. Moreover, the coercivity of the resultant rare earth permanent magnet still needs to be enhanced.

**SUMMARY OF THE DISCLOSURE**

One objective of the present disclosure is to provide a rare earth permanent magnet superior in resistance to demagnetization. The magnet is suitable for permanent magnet motors with 4 or more poles. Another objective of the present disclosure is to provide a method of manufacturing the rare earth permanent magnet. Still another objective of the present disclosure is to provide an electric motor. The present disclosure accomplishes those objectives by adopting technical solutions described below.

One aspect of the present disclosure is to provide a rare earth permanent magnet of a cuboid structure with length, width, and height, wherein when a direction of the height is defined as an H direction, which is the easy axis of magnetization of the rare earth permanent magnet, and a direction of the width is defined as a W direction; and

when the cuboid structure has a surface A1 and a surface An that are parallel to each other and formed by the length and the height of the cuboid structure, and a plurality of cross-sections Ai parallel to the surface A1 exist between the surface A1 and the surface An, of which the cross-section located at the central axis of the cuboid structure is denoted as Aj,

then the coercivity $H_{cj}$ decreases from the surface A1 to the cross-section Aj in the W direction, and the coercivity $H_{cj}$ decreases from the surface An to the cross-section Aj in the W direction;

wherein when the coercivity at a certain point D1 on the surface A1 is denoted as H1; and when a line extended from the point D1 in the W direction intersects the cross-section Aj at a point E1, and the coercivity at the point E1 is denoted as *H1'*, then it follows that *H1 - H1'* > 80 kA/m; and

wherein when the coercivity at a certain point Dn on the surface An is denoted as *Hn;* and when a line extended from the point Dn in the W direction intersects the cross-section Aj at a point En, and the coercivity at the point En is denoted as *Hn'*, then it follows that *Hn - Hn'* > 80 kA/m.

Preferably, the amount of a rare earth (RE) in the rare earth permanent magnet of the present disclosure is 28-34 wt%, and the RE is a light rare earth element and a heavy rare earth element, wherein the light rare earth element must include Nd, and the heavy rare earth element is selected from one or more of the group consisting of Dy, Tb, Gd, Ho, and Y.

In the rare earth permanent magnet of the present disclosure, preferably, the light rare earth element is selected from one or more of the group consisting of Pr, Nd, La, and Ce, and must include Nd, while the heavy rare earth element is Dy and Tb.

In the rare earth permanent magnet of the present disclosure, preferably, in the W direction, the relationship between the coercivity y at a certain point of the rare earth permanent magnet and the position x of that point approximately satisfies the parabola $y = ax^2 + bx + c$, where $a > 0$, $b < 0$, and $c > 0$.

Another aspect of the present disclosure is to provide a method of manufacturing the rare earth permanent magnet as described above, which comprises:

1) providing an initial sintered NdFeB magnet of a cuboid structure, wherein a direction of height of the initial sintered NdFeB magnet is denoted as an $H_0$ direction, and a direction of width thereof is denoted as a $W_0$ direction, and wherein the $H_0$ direction is the same as the H direction of the rare earth permanent magnet, and the $W_0$ direction is the same as the W direction of the rare earth permanent magnet;

2) applying a heavy rare earth coating containing Dy to each of two opposite surfaces of the initial sintered NdFeB magnet in a direction perpendicular to the $H_0$ direction to obtain a magnet A;

3) applying a heavy rare earth coating containing Tb to each of two opposite side surfaces of the magnet A in a direction perpendicular to the $W_0$ direction to obtain a magnet B; and

4) subjecting the magnet B to heat treatment to obtain the rare earth permanent magnet.

In the method of the present disclosure, preferably, the initial sintered NdFeB magnet has $R_2Fe_{14}B$ as the main phase.

In the method of the present disclosure, preferably, the initial sintered NdFeB magnet in step (1) further contains another element M, the other element M being selected from two or more of the group consisting of Cu, Co, Ga, Ti, Zr, Mo, and Nb.

In the method of the present disclosure, preferably, the weight gain of Dy in step (2) ranges from 0.4 wt% to 1.5 wt%.

**In** the method of the present disclosure, preferably, the weight gain of **Tb** in step (3) ranges from 0.05 wt% to 0.5 wt%.

Still another aspect of the present disclosure is to provide an electric motor, comprising the rare earth permanent magnets as described above, wherein the rare earth permanent magnets are disposed in any one of the following manners:

(1) N of the rare earth permanent magnets are arranged evenly in a circumferential direction of motor rotation such that the rare earth permanent magnets are located on a regular N-sided polygon with angles between each pair of the adjacent rare earth permanent magnets being equal to each other, wherein N is a positive integer greater than or equal to 3;

(2) 2M of the rare earth permanent magnets are divided into M groups and arranged evenly in a circumferential direction of motor rotation such that the line connecting the more distant end faces of each group of the rare earth permanent magnets is located on a regular M-sided polygon, and that the two rare earth permanent magnets in each group of the rare earth permanent magnets are arranged in a V shape, with angles between the two rare earth permanent magnets in each group of the rare earth permanent magnets being equal to each other, wherein M is a positive integer greater than or equal to 8;

(3) 3P of the rare earth permanent magnets are divided into P groups and arranged evenly in a circumferential direction of motor rotation such that the three magnets in each group of the rare earth permanent magnets form an isosceles triangle and the magnet serving as the base of the isosceles triangle is located on a regular P-sided polygon, wherein P is a positive integer greater than or equal to 8; and

(4) 4Q of the rare earth permanent magnets are divided into Q groups and arranged evenly in a circumferential direction of motor rotation such that the four rare earth permanent magnets in each group of the rare earth permanent magnets form two parallel V shapes, and that the line connecting the more distant end faces of the two magnets forming the V shape in each group of the rare earth permanent magnets is located on a regular Q-sided polygon, wherein Q is a positive integer greater than or equal to 6.

The rare earth permanent magnet of the present disclosure exhibits superior resistance to demagnetization, suitable for permanent magnet motors with four or more poles. The manufacturing method of the present disclosure enables the production of rare earth permanent magnets with a specific coercivity distribution and superior resistance to demagnetization. Additionally, the process of the present disclosure is excellent in repeatability.

## BRIEF SUMMARY OF THE DRAWINGS

FIG. 1 is a schematic diagram of a motor formed by the rare earth permanent magnet of the present disclosure in use.
FIG. 2 is a schematic diagram of a motor formed by the rare earth permanent magnet of the present disclosure in use.
FIG. 3 is a schematic diagram of sampling the rare earth permanent magnet obtained in Preparation Example 1.
FIG. 4 is a schematic diagram of sampling the rare earth permanent magnet obtained in Preparation Example 1 in the W direction and the H direction.
FIG. 5 is a curve showing the coercivity of 15 specimens (A1 to A15) taken from an edge portion of the rare earth permanent magnet obtained in Preparation Example 1 that was cut in the W direction.

## DETAIL DESCRIPTION OF THE DISCLOSURE

The following is a further description of the present disclosure by means of embodiments, but the present disclosure is not limited to those embodiments.

In the present disclosure, the term "coercivity" also known as intrinsic coercivity, refers to the intensity of a magnetic field required to reduce, by monotonically decreasing the magnetic field to zero and then increasing it in an opposite direction, the magnetization of a magnet, after it has been magnetized to saturation, to zero along the saturation hysteresis loop. The unit of measurement of coercivity is oersteds (Oe) or amperes per meter (A/m). 1 Oe is approximately equal to 79.6 A/m.

The term "remanence" herein refers to the value of magnetic flux density corresponding to the point on the saturation hysteresis loop where the magnetic field intensity is zero, measured in Tesla (T) or Gauss (Gs).

In the present disclosure, the term "inert gas" includes helium, neon, argon, krypton, and xenon. An "inert atmosphere" refers to an atmosphere formed by an inert gas that does not affect the performance of a magnet.

<Rare **earth permanent** magnet>

The rare earth permanent magnet of the present disclosure is mounted in radial flux motors and suitable for permanent magnet motors with at least four poles. A four-pole motor refers to an electric motor with two pairs of magnetic poles.

In the present disclosure, the rare earth permanent magnet is of a cuboid structure with length, width, and height, wherein when a direction of the height is defined as an H direction, which is the easy axis of magnetization of the rare earth permanent magnet, and a direction of the width is defined as a W direction; and

when the cuboid structure has a surface A1 and a surface An that are parallel to each other and formed by the length and the height of the cuboid structure, and a plurality of cross-sections Ai parallel to the surface A1 exist between the surface A1 and the surface An, of which the cross-section located at the central axis of the cuboid structure is denoted as Aj,
then the coercivity $H_{cj}$ decreases from the surface A1 to the cross-section Aj in the W direction, and the coercivity $H_{cj}$ decreases from the surface An to the cross-section Aj in the W direction;
wherein when the coercivity at a certain point D1 on the surface A1 is denoted as H1; and when a line extended from the point D1 in the W direction intersects the cross-section Aj at a point E1, and the coercivity at the point E1 is denoted as $H1'$, then it follows that $H1 - H1' > 80$ kA/m; and
wherein when the coercivity at a certain point Dn on the surface An is denoted as $Hn;$ and when a line extended from the point Dn in the W direction intersects the cross-section Aj at a point En, and the coercivity at the point En is denoted as $Hn'$, then it follows that $Hn - Hn' > 80$ kA/m. Such a rare earth permanent magnet results in a motor with better resistance to demagnetization.

In one embodiment of the present disclosure, the point D1, the point E1, and the point Dn are located on the same straight line in the W direction, and the point E1 coincides with the point En.

The difference between *H1* and *H1'* is greater than 80 kA/m, preferably greater than 100 kA/m, and more preferably greater than or equal to 145 kA/m. The difference between *Hn* and *Hn'* is greater than 80 kA/m, preferably greater than 100 kA/m, and more preferably greater than or equal to 145 kA/m. Such a rare earth permanent magnet results in a motor with better resistance to demagnetization.

In the present disclosure, the coercivity $H_{cj}$ gradually decreases from the surface A1 to the cross-section Aj in the W direction; the coercivity $H_{cj}$ gradually decreases from the surface An to the cross-section Aj in the W direction. That is, the coercivity of the rare earth permanent magnet gradually decreases from both ends toward the center in the W direction. The maximum coercivity at the end (A1 or An) is greater than 2016 kA/m, preferably greater than or equal to 2019 kA/m; the minimum coercivity at the center (Aj) is greater than 1700 kA/m, and preferably greater than or equal to 1730 kA/m.

In the present disclosure, the length of the rare earth permanent magnet is greater than its width.

In the present disclosure, the rare earth permanent magnet can be a magnet of an integral structure or be a spliced magnet. In one embodiment of the present disclosure, the rare earth permanent magnet is of an integral structure, not a spliced magnet.

In the W direction, the relationship between the coercivity y at a certain point of the rare earth permanent magnet and the position x of that point approximately satisfies the parabola $y = ax^2 + bx + c$, where $a > 0$, $b < 0$, and $c > 0$. Taking a point on the surface A1 (or the surface A2) of the rare earth permanent magnet as the origin of a planar Cartesian coordinate system, with the W direction as the x-axis and the H direction as the y-axis, x ranges from 0.1 to 20, and preferably from 0.2 to 19.

In some embodiments, a ranges from 2 to 5, b ranges from -88 to -38, and c ranges from 2,000 to 2,070. In some embodiments, a ranges from 3 to 5, b ranges from -82 to -50, and c ranges from 2,060 to 2,070. In other embodiments, a ranges from 2 to 4, b ranges from -65 to -38 (preferably from -65 to -40), and c ranges from 2,015 to 2,030 (preferably from 2,020 to 2,030).

In one embodiment of the present disclosure, a = 2.3, *b* = -40.3, and c = 2,029.0. In another embodiment of the present disclosure, a = 3.6, b = -64.0, and c = 2,020.8.

In the present disclosure, the remanence of the rare earth permanent magnet basically increases from both ends toward the center in the W direction.

The rare earth permanent magnet of the present disclosure contains a light rare earth element and a heavy rare earth element. The light rare earth element must include Nd, and the heavy rare earth element is selected from one or more of the group consisting of Dy, Tb, Gd, Ho, and Y. In one embodiment of the present disclosure, the light rare earth element is selected from one or more of the group consisting of Pr, Nd, La, and Ce, and must include Nd, while the heavy rare earth element is Dy and Tb.

In the present disclosure, the amount of the rare earth element (RE) is 28-34 wt%, preferably 29-34 wt%, and more preferably 31-34 wt%, based on the total weight of the rare earth permanent magnet.

In one embodiment of the present disclosure, the rare earth permanent magnet has a length of 30-45 mm, a width of 10-20 mm, and a height of less than 10 mm.

The present disclosure has found that such a rare earth permanent magnet exhibits not only high remanence and high coercivity but also superior resistance to demagnetization, and thus it is suitable for permanent magnet motors with four or more poles.

### <Manufacturing method>

The present disclosure also provides a method of manufacturing the rare earth permanent magnet as described above. The method comprises the following steps: (1) providing an initial sintered NdFeB magnet; (2) obtaining a magnet A; (3) obtaining a magnet B; and (4) performing heat treatment. This process is conducive to obtaining the rare earth permanent magnet as described above.

The following is a detailed description of the method:

Providing an initial sintered NdFeB magnet

The first step is to provide an initial sintered NdFeB magnet having $R_2Fe_{14}B$ as the main phase. The initial sintered NdFeB magnet is of a cuboid structure with length, width, and height.

A direction of the height of the initial sintered NdFeB magnet is denoted as an $H_0$ direction, and a direction of the width thereof is denoted as a $W_0$ direction. The $H_0$ direction is the same as the H direction of the resultant rare earth permanent magnet, and the $W_0$ direction is the same as the W direction of the resultant rare earth permanent magnet.

In the initial sintered NdFeB magnet, R represents a rare earth element, including Nd and Pr. The sintered NdFeB magnet comprises, based on its total weight: PrNd in an amount of 28-32 wt%, B in an amount of 0.85-0.99 wt%, Dy in an amount of 0.01-2 wt%, Cu in an amount of 0.01-0.27 wt%, Co in an amount of 0.01-1.95 wt%, Ga in an amount of 0.01-0.5 wt%, and Q in an amount of 0.01-0.25 wt%, with Fe being the balance. Q is selected from at least one of Ti, Zr, Mo, and Nb, and the weight ratio of Pr to Nd is 1:3 to 1:4. In a preferred embodiment, the sintered NdFeB magnet consists of the above components.

Based on the total weight of the initial sintered NdFeB magnet, PrNd is in an amount of preferably 29.0-31 wt%, and more preferably 29.5-30.5 wt%. B is in an amount of preferably 0.87-0.97 wt%, and more preferably 0.89-0.96 wt%. Dy is in an amount of preferably 0.1-1.9 wt%, and more preferably 0.4-1.6 wt%. Cu is in an amount of preferably 0.05-0.26 wt%, and more preferably 0.10-0.21 wt%. Co is in an amount of preferably 0.1-1.7 wt%, more preferably 0.5-1.5 wt%, and even more preferably 1.0-1.25 wt%. Ga is in an amount of preferably 0.1-0.44 wt%, and more preferably 0.15-0.36 wt%, such as 0.18 wt%, 0.21 wt%, or 0.34 wt%. Q is in an amount of preferably 0.05-0.21 wt%, more preferably 0.10-0.19 wt%, and even more preferably 0.15-0.18 wt%. Q is preferably Ti.

## Obtaining a magnet A

A heavy rare earth coating containing Dy is applied to each of two opposite surfaces of the initial sintered NdFeB magnet in a direction perpendicular to the $H_0$ direction to obtain a magnet A. In the initial sintered NdFeB magnet of a cuboid structure, the two opposite surfaces are the length $\times$ width surfaces. This is conducive to obtaining a rare earth permanent magnet with a specific coercivity distribution.

In the present disclosure, the method of applying a heavy rare earth coating containing Dy is not particularly limited, and those known in the art can be used. In some embodiments, the method of applying a heavy rare earth coating containing Dy to each of two opposite surfaces of the initial sintered NdFeB magnet in a direction perpendicular to the $H_0$ direction is selected from one of spraying, screen printing, and magnetron sputtering.

In one embodiment of the present disclosure, the heavy rare earth coating containing Dy is applied by spraying, during which a spraying device can be used.

In one embodiment of the present disclosure, the heavy rare earth coating containing Dy is formed by spraying a material containing Dy. The material containing Dy can be prepared by mixing a Dy-containing substance (e.g., dysprosium hydride and dysprosium powder) with an organic solvent to form a Dy mixture. The Dy mixture can be in a mass concentration of 25-50 wt%, preferably 25-45 wt%, and more preferably 25-35 wt%. The organic solvent can be selected from those known in the art, e.g., from one of acetone, ethanol, isopropanol, and petroleum ether. For example, the organic solvent can be ethanol, and preferably anhydrous ethanol. This enables Dy to be applied with precision and with high adhesion and favorable repeatability.

In one embodiment of the present disclosure, during the spraying, the initial sintered NdFeB magnet is preheated first at a temperature of 120-240 °C, preferably 150-200 °C, and more preferably 180-200 °C. One surface of the initial sintered NdFeB magnet is sprayed with the material containing Dy in a direction perpendicular to the $H_0$ direction, resulting in a heavy rare earth coating containing Dy on that surface. The weight gain of Dy on the single surface is controlled to be 0.2-1 wt%, preferably 0.25-0.8 wt%, and more preferably 0.3-0.55 wt%. The weight gain of Dy on the single surface is calculated by (weight of the initial sintered NdFeB magnet with the heavy rare earth coating containing Dy on one surface - weight of the initial sintered NdFeB magnet) / weight of the initial sintered NdFeB magnet $\times$ 100 %.

After the spraying on one surface is completed, the magnet is flipped, and the other surface of the initial sintered NdFeB magnet is sprayed with the material containing Dy in a direction perpendicular to the $H_0$ direction, resulting in a magnet A. The weight gain of Dy on the single surface is controlled to be 0.2-1 wt%, preferably 0.25-0.8 wt%, and more preferably 0.3-0.55 wt%.

During the spraying, the total weight gain of Dy is controlled to be 0.4-1.5 wt%, preferably 0.5-1.2 wt%, and more preferably 0.6-1.0 wt%. The total weight gain of Dy is calculated by (weight of the magnet A - weight of the initial sintered NdFeB magnet) / weight of the initial sintered NdFeB magnet $\times$ 100 %.

## Obtaining a magnet B

A heavy rare earth coating containing Tb is applied to each of two opposite side surfaces of the magnet A in a direction perpendicular to the $W_0$ direction to obtain a magnet B. In the magnet A of a cuboid structure, these two opposite side surfaces are the length $\times$ height (or thickness) surfaces. This is conducive to obtaining a rare earth permanent magnet with specific coercivity.

In the present disclosure, the method of applying a heavy rare earth coating containing Tb to each of two opposite side surfaces of the magnet A in a direction perpendicular to the $W_0$ direction is not particularly limited, and those known in the art can be used. For example, it can be selected from one of spraying, screen printing, and magnetron sputtering.

In one embodiment of the present disclosure, the heavy rare earth coating containing Tb is formed by spraying a material containing Tb. The material containing Tb can be prepared by mixing a Tb-containing substance (e.g., terbium powder) with an organic solvent to form a Tb mixture. The Tb mixture can be in a mass concentration of 25-50 wt%, preferably 25-40 wt%, and more preferably 25-30 wt%. The organic solvent can be selected from those known in the art, e.g., from one of acetone, ethanol, isopropanol, and petroleum ether. The organic solvent is preferably ethanol. This enables Tb to be applied with precision and with high adhesion and favorable repeatability. In the present disclosure, a spraying device can be used during the spraying.

In one embodiment of the present disclosure, during the spraying, the magnet A is preheated first at a temperature of 120-240 °C, preferably 150-200 °C, and more preferably 180-200 °C. One side surface of the magnet A is sprayed with the material containing Tb in a direction perpendicular to the $W_0$ direction, resulting in a heavy rare earth coating containing Tb on that side surface. The weight gain of Tb on the single surface is controlled to be 0.02-0.2 wt%, preferably 0.03-0.15 wt%, and more preferably 0.05-0.1 wt%. The weight gain of Tb on the single surface is calculated by (weight of the magnet A with the heavy rare earth coating containing Tb on one side surface - weight of the magnet A) / weight of the magnet A $\times$ 100 %.

After the spraying on one side surface is completed, the magnet is flipped, and the other side surface of the magnet A is sprayed with the material containing Tb in a direction perpendicular to the $W_0$ direction, resulting in a magnet B. The weight gain of Tb on the single surface is controlled to be 0.02-0.2 wt%, preferably 0.03-0.15 wt%, and more preferably 0.05-0.1 wt%.

During the spraying, the total weight gain of Tb is controlled to be 0.05-0.5 wt%, preferably 0.1-0.5 wt%, and more preferably 0.15-0.35 wt%. The total weight gain of Tb is calculated by: (weight of the magnet B - weight of the magnet A) / weight of the magnet A $\times$ 100 %.

Preforming heat treatment

The magnet B is subjected to heat treatment to obtain the rare earth permanent magnet.

In the present disclosure, the heat treatment can be carried out under vacuum conditions. The vacuum degree is less than or equal to 0.1 Pa, preferably less than or equal to 0.01 Pa, and more preferably less than or equal to 0.001 Pa.

The magnet B can be subjected to heat treatment at a plurality of gradient temperatures to obtain the rare earth permanent magnet. Preferably, the magnet B is subjected to heat treatment at a first temperature, a second temperature, a third temperature, and a fourth temperature, followed by cooling; then, the magnet B is heated at a fifth temperature, followed by cooling, resulting in the rare earth permanent magnet.

The magnet B is heated to the first temperature and heat-treated at this temperature for 1-1.5 hours. The first temperature is 100-140 °C, preferably 100-130 °C, and more preferably 100-120 °C. Next, the temperature is raised to the second temperature, and the magnet B is kept at this temperature for 1-1.5 hours. The second temperature can be 180-250 °C, preferably 200-230 °C, and more preferably 200-220 °C. Subsequently, the temperature is further increased to the third temperature, and the magnet B is kept at this temperature for 1-1.5 hours. The third temperature can be 450-550 °C, preferably 500-550 °C, and more preferably 500-530 °C. Next, the temperature is raised to the fourth temperature, and the magnet B is kept at this temperature for 8-24 hours. The fourth temperature can be 860-950 °C, preferably 880-920 °C, and more preferably 900-920 °C. The period of heat treatment at the fourth temperature is preferably 10-11 hours.

In the present disclosure, the cooling can be performed with an inert gas, preferably argon. The magnet B can be cooled to a temperature of 50 °C or less.

Then, the temperature is raised to the fifth temperature, and the magnet B is kept at this temperature for 4-7 hours. The fifth temperature can be 450-550 °C, preferably 490-530 °C, and more preferably 500-530 °C. The period of heat treatment at the fifth temperature is preferably 5-6 hours. After the heat treatment at the fifth temperature is completed, the magnet B is cooled to a temperature of 50 °C or less, resulting in the rare earth permanent magnet. This is conducive to obtaining a rare earth permanent magnet with stable performance.

In one embodiment of the present disclosure, the magnet B is heated to the first temperature of 100-140 °C and kept at this temperature for 1-1.5 hours. Subsequently, the temperature is raised to the second temperature of 180-250 °C, and the magnet B is kept at this temperature for 1-1.5 hours. Then, the temperature is increased to the third temperature of 450-550 °C, and the magnet B is kept at this temperature for 1-1.5 hours. The temperature is further raised to the fourth temperature of 850-950 °C, and the magnet B is kept at this temperature for 8-24 hours. After the heating is stopped, the magnet B is cooled with an inert gas to a temperature of 50 °C or less. Then, the temperature is raised to the fifth temperature of 450-520 °C, and the magnet B is kept at this temperature for 4-7 hours. After the heating is stopped, the magnet B is cooled with an inert gas to a temperature of 50 °C or less, resulting in the rare earth permanent magnet. This is conducive to obtaining a rare earth permanent magnet with stable performance.

<Electric motor>

The present disclosure also provides an electric motor, comprising the rare earth permanent magnets as described above. The rare earth permanent magnets are disposed in any one of the following manners:

(1) N of the rare earth permanent magnets are arranged evenly in a circumferential direction of motor rotation such that the rare earth permanent magnets are located on a regular N-sided polygon with angles between each pair of the adjacent rare earth permanent magnets being equal to each other, wherein N is a positive integer greater than or equal to 3;

(2) 2M of the rare earth permanent magnets are divided into M groups and arranged evenly in a circumferential direction of motor rotation such that the line connecting the more distant end faces of each group of the rare earth permanent magnets is located on a regular M-sided polygon, and that each group of the rare earth permanent magnets is arranged in a V shape, with angles between the two rare earth permanent magnets in each group of the rare earth permanent magnets being equal to each other, wherein M is a positive integer greater than or equal to 8;

(3) 3P of the rare earth permanent magnets are divided into P groups and arranged evenly in a circumferential direction of motor rotation such that the three magnets in each group of the rare earth permanent magnets form an isosceles triangle and the magnet serving as the base of the isosceles triangle is located on a regular P-sided polygon, wherein P is a positive integer greater than or equal to 8; and

(4) 4Q of the rare earth permanent magnets are divided into Q groups and arranged evenly in a circumferential direction of motor rotation such that the four rare earth permanent magnets in each group form two parallel V shapes and the line connecting the more distant end faces of the two of the magnets forming the V shape in each group is located on a regular Q-sided polygon, wherein Q is a positive integer greater than or equal to 6.

The motor is a multi-pole motor with four or more poles. The motor is excellent in resistance to demagnetization.

In one embodiment of the present disclosure, eight rare earth permanent magnets are arranged evenly in a circumferential direction of motor rotation such that the rare earth permanent magnets are located on a regular octagon with angles between each pair of the adjacent rare earth permanent magnets being equal to each other. In one embodiment of the present disclosure, sixteen rare earth permanent magnets are divided into eight groups and arranged evenly in a circumferential direction of motor rotation such that the line connecting the more distant end faces of each group of the rare earth permanent magnets is located on a regular M-sided polygon, and that the two rare earth permanent magnets in each group of the rare earth permanent magnets are arranged in a V shape, with angles between the two rare earth permanent magnets in each group of the rare earth permanent magnets being equal to each other.

**<Testing method>**

Measurement of Magnetic Properties: The magnetic properties are measured at room temperature with a magnetic tester from Metis, Belgium.

**<Material description>**

For spraying of a material containing Dy, a mixture made of dysprosium powder and anhydrous ethanol in which Dy is in a mass concentration of 30 wt% is used; for spraying of a material containing Tb, a mixture made of terbium powder and anhydrous ethanol in which Tb is in a mass concentration of 30 wt% is used.

Preparation Example 1 - Rare Earth Permanent Magnet

This example provided a rare earth permanent magnet, which was to be mounted on a radial flux motor.

The rare earth permanent magnet was of a cuboid structure with length, width, and height. A direction of the height was defined as an H direction, which was the easy axis of magnetization of the rare earth permanent magnet, and a direction of the width was defined as a W direction.

The cuboid structure had a surface A1 and a surface An that were parallel to each other and formed by the length and the height of the cuboid structure. A plurality of cross-sections Ai parallel to the surface A1 existed between the surface A1 and the surface An, of which the cross-section located at the central axis of the cuboid structure was denoted as Aj.

The coercivity $H_{cj}$ decreased from the surface A1 to the cross-section Aj in the W direction, and the coercivity $H_{cj}$ decreased from the surface An to the cross-section Aj in the W direction. The coercivity at a certain point D1 on the surface A1 was denoted as $H1$. A line extended from the point D1 in the W direction intersected the cross-section Aj at a point E1. The coercivity at the point E1 was denoted as $H1'$. It followed that $H1 - H1' > 80$ kA/m. The coercivity at a certain point Dn on the surface An was denoted as $Hn$. A line extended from the point Dn in the W direction intersected the cross-section Aj at a point En. The coercivity at the point En was denoted as $Hn'$. It followed that $Hn - Hn' > 80$ kA/m. The point D1, the point E1, and the point Dn were located on the same straight line in the W direction, and the point E1 coincided with the point En.

In the W direction, the relationship between the coercivity $y$ at a certain point of the rare earth permanent magnet and the position *x* of that point approximately satisfied the parabola $y = ax^2 + bx + c$, where $a > 0$, $b < 0$, and $c > 0$. Taking a point on the surface A1 of the rare earth permanent magnet as the origin of a planar Cartesian coordinate system, with the W direction as the x-axis and the H direction as the y-axis, x ranged from 0.1 to 20.

There is hereinafter a description of the method of manufacturing the rare earth permanent magnet, which comprised steps described below.

The first step was to provide an initial sintered NdFeB magnet with the dimension 39 mm (length) $\times$ 17.8 mm (width) $\times$ 4 mm (height, i.e., the orientation direction), and polish the surface of the magnet. The composition of the initial sintered NdFeB magnet is shown in Table 1.

Table 1

| Components | PrNd | B | Dy | Cu | Co | Ga | Ti | Fe |
|---|---|---|---|---|---|---|---|---|
| wt% | 29.97 | 0.95 | 0.54 | 0.19 | 1.08 | 0.21 | 0.15 | balance |
| Note: The weight ratio of Pr to Nd was 1:3. | | | | | | | | |

A direction of the height of the initial sintered NdFeB magnet was denoted as an $H_0$ direction, and a direction of the width thereof was denoted as a $W_0$ direction. The $H_0$ direction was the same as the H direction of a resultant rare earth permanent magnet, and the $W_0$ direction was the same as the W direction of the resultant rare earth permanent magnet.

A heavy rare earth coating containing Dy was applied to each of two opposite surfaces of the initial sintered NdFeB magnet in a direction perpendicular to the $H_0$ direction to obtain a magnet A. Specifically, the initial sintered NdFeB magnet was placed in a spraying device with one (the one with the dimension 39 mm $\times$ 17.8 mm) of its surfaces being oriented upward, and preheated at 180 °C. A heavy rare earth coating containing Dy was applied to the one surface by spraying. The weight gain of Dy on the single surface was 0.325 wt%. The magnet was flipped, and a heavy rare earth coating containing Dy was applied to another surface (the surface opposite to the 39 mm $\times$ 17.8 mm surface) by spraying, resulting in a magnet A. The weight gain of Dy on the single surface was 0.325 wt%.

A heavy rare earth coating containing Tb was applied to each of two opposite surfaces of the magnet A in a direction perpendicular to the $W_0$ direction to obtain a magnet B. Specifically, the magnet A was preheated at 180 °C with one (the one with the dimension 39 mm $\times$ 4 mm) of its side surfaces being oriented upward. A heavy rare earth coating containing Tb was applied to the one side surface by spraying. The weight gain of Tb on the single surface was 0.075 wt%. The magnet was flipped, and a heavy rare earth coating containing Tb was applied to another side surface (the side surface opposite to the 39 mm $\times$ 4 mm side surface) by spraying, resulting in a magnet B. The weight gain of Tb on the single surface was 0.075 wt%.

The magnet B was subjected to heat treatment to obtain the rare earth permanent magnet. Specifically, the magnet B was heated to the first temperature of 100 °C and kept at 100 °C for 1 hour. Subsequently, the temperature was raised to the second temperature of 200 °C, and the magnet B was kept at 200 °C for 1 hour. Then, the temperature was increased to the third temperature of 500 °C, and the magnet B was kept at 500 °C for 1 hour. The temperature was further raised to the fourth temperature of 920 °C, and the magnet B was kept at 920 °C for 12 hours. After the heating was stopped, the magnet B was cooled with argon to a temperature of 50 °C or less. Then, the temperature was raised to the fifth temperature of 490 °C, and the magnet B was kept at 490 °C for 5 hours. After the heating was stopped, the magnet B was cooled with argon to a temperature of 50 °C or less, resulting in the rare earth permanent magnet.

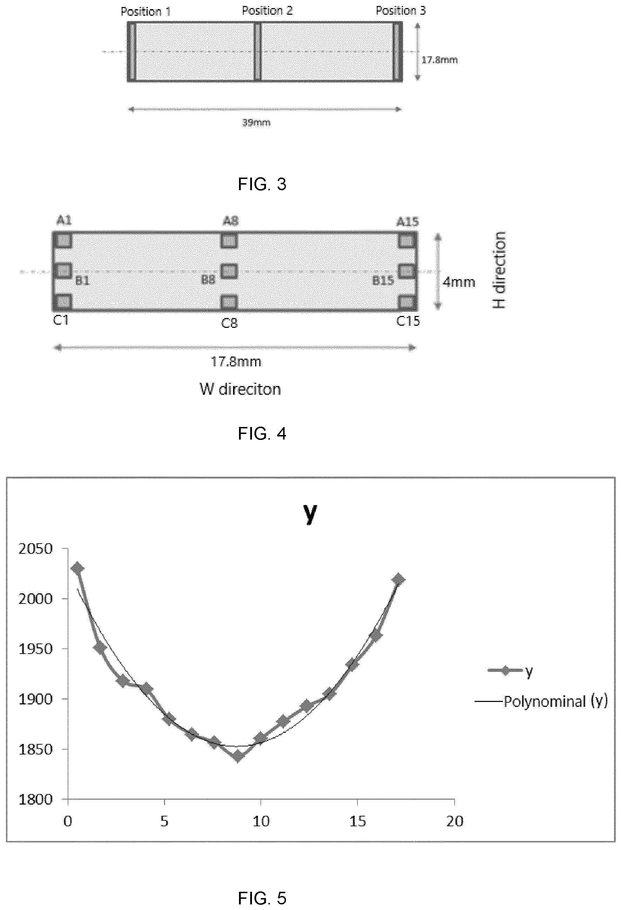

Referring to Fig. 3, three samples with the dimension 17.8 mm $\times$ 4 mm $\times$ 1 mm were taken from the rare earth permanent magnet by cutting it in the length and width directions (length: 39 mm, width: 17.8 mm). The cutting was at the positions of both ends and the position of the center in the length direction (length: 39 mm) of the magnet, namely position 1, position 2, and position 3.

Referring to Fig. 4, specimens with the dimension 1 mm $\times$ 1 mm $\times$ 1 mm were taken from one of the samples with the dimension 17.8 mm $\times$ 4 mm $\times$ 1 mm by cutting it at the positions of the centerline and the two edges in the H direction (height: 4 mm). Fifteen specimens were taken from each sample, numbered as shown in Table 2. The room-temperature properties of the specimens were measured, as detailed in Table 2. Since position 1 and position 3 are symmetrical, only the specimens taken from position 1 were tested for their properties. A curve was plotted using the values of coercivity of specimens A1 to A15 from position 1, as shown in Fig. 5.

Table 2

| Specimen No. | $Br$ (T) | $H_{cj}$ (kA/m) |
|---|---|---|
| 1 (A1) | 1.332 | 2030 |
| 2 (A2) | 1.344 | 1951 |

(continued)

| Specimen No. | $Br$ (T) | $H_{cj}$ (kA/m) |
|---|---|---|
| 3 (A3) | 1.339 | 1918 |
| 4 (A4) | 1.338 | 1910 |
| 5 (A5) | 1.401 | 1880 |
| 6 (A6) | 1.403 | 1865 |
| 7 (A7) | 1.411 | 1857 |
| 8 (A8) | 1.41 | 1843 |
| 9 (A9) | 1.405 | 1861 |
| 10 (A10) | 1.402 | 1878 |
| 11 (A11) | 1.403 | 1893 |
| 12 (A12) | 1.339 | 1905 |
| 13 (A13) | 1.338 | 1934 |
| 14 (A14) | 1.341 | 1963 |
| 15 (A15) | 1.338 | 2019 |
| 1' (B1) | 1.335 | 2013 |
| 2' (B2) | 1.341 | 1941 |
| 3' (B3) | 1.345 | 1820 |
| 4' (B4) | 1.344 | 1805 |
| 5' (B5) | 1.409 | 1783 |
| 6' (B6) | 1.41 | 1753 |
| 7' (B7) | 1.414 | 1751 |
| 8' (B8) | 1.41 | 1738 |
| 9' (B9) | 1.405 | 1759 |
| 10' (B10) | 1.402 | 1788 |
| 11' (B11) | 1.403 | 1791 |
| 12' (B12) | 1.339 | 1803 |
| 13' (B13) | 1.338 | 1841 |
| 14' (B14) | 1.341 | 1929 |
| 15' (B15) | 1.338 | 1988 |

As is clear from Table 2, the coercivity of the rare earth permanent magnet of the present disclosure decreased from both ends toward the center in the W direction. Moreover, the difference between $H1$ (e.g., 2030 kA/m, the coercivity of specimen A1)-which was the coercivity at a certain point D1 on the surface A1 of the rare earth permanent magnet-and $H1'$ (e.g., 1843 kA/m, the coercivity of specimen A8)-which was the coercivity at the point E1 (where a line extended from the point D1 in the W direction intersected the cross-section Aj )was greater than 80 kA/m, for example, 187 kA/m.

Similarly, the difference between the coercivity of specimen A15 (2019 kA/m) and that of specimen A8 (1843 kA/m) was greater than 80 kA/m, for example, 176 kA/m.

Similarly, the difference between the coercivity of specimen B1 (2013 kA/m) and that of specimen B8 (1738 kA/m) was greater than 80 kA/m, for example, 275 kA/m.

Similarly, the difference between the coercivity of specimen B15 (1988 kA/m) and that of specimen B8 (1738 kA/m) was greater than 80 kA/m, for example, 250 kA/m.

In the W direction, the relationship between the coercivity y at a certain point of the rare earth permanent magnet and the position x of that point approximately satisfied the parabola $y = ax^2 + bx + c$, where a > 0, b < 0, and c > 0. Taking a point on the surface A1 of the rare earth permanent magnet as the origin of a planar Cartesian coordinate system, with the W direction as the x-axis and the H direction as the y-axis, x ranged from 0.1 to 20.

At the edge region (A1 to A15), in the parabola, $a$ = 2.3, $b$ = -40.3, and $c$ = 2,029.0; $R^2$ = 0.9691.

At the central region (B1 to B15), in the parabola, $a$ = 3.6, $b$ = -64.0, $c$ = 2,020.8; $R^2$ = 0.9515.

Referring to Fig. 4, specimens A1' to A15' and specimens B1' to B15' were taken from the sample at position 2 of Fig. 3 in the same way that specimens A1 to A15 and specimens B1 to B15 were taken from the sample at position 1, and were tested in the same way that the specimens taken from the sample at position 1 were tested. The values of coercivity are listed in Table 3.

Table 3

| Specimen No. | $Br$ (T) | $H_{cj}$ (kA/m) |
|---|---|---|
| 1" (A1') | 1.333 | 2035 |
| 2" (A2') | 1.341 | 1958 |
| 3" (A3') | 1.336 | 1921 |
| 4" (A4') | 1.335 | 1913 |
| 5" (A5') | 1.405 | 1885 |
| 6" (A6') | 1.402 | 1859 |
| 7" (A7') | 1.41 | 1861 |
| 8" (A8') | 1.409 | 1848 |
| 9" (A9') | 1.403 | 1869 |
| 10" (A10') | 1.4 | 1875 |
| 11" (A11') | 1.401 | 1897 |
| 12" (A12') | 1.337 | 1910 |
| 13" (A13') | 1.336 | 1939 |
| 14" (A14') | 1.342 | 1961 |
| 15" (A15') | 1.336 | 2026 |
| 1‴ (B1') | 1.337 | 2009 |
| 2‴ (B2') | 1.342 | 1936 |
| 3‴ (B3') | 1.343 | 1823 |
| 4‴ (B4') | 1.346 | 1811 |
| 5‴ (B5') | 1.406 | 1785 |
| 6‴ (B6') | 1.413 | 1751 |
| 7‴ (B7') | 1.411 | 1748 |
| 8‴ (B8') | 1.412 | 1741 |
| 9‴ (B9') | 1.408 | 1756 |
| 10‴ (B10') | 1.405 | 1786 |
| 11‴ (B11') | 1.401 | 1797 |
| 12‴ (B12') | 1.337 | 1805 |
| 13‴ (B13') | 1.339 | 1839 |
| 14‴ (B14') | 1.34 | 1926 |
| 15‴ (B15') | 1.336 | 1991 |

As is clear from Table 3, the coercivity of the rare earth permanent magnet of the present disclosure decreased from both ends toward the center in the W direction.

Moreover, the difference between $H1$ (e.g., 2035 kA/m, the coercivity of specimen A1')-which was the coercivity at a certain point D1 on the surface A1 of the rare earth permanent magnet-and $H1'$ (e.g., 1848 kA/m, the coercivity of specimen A8')-which was the coercivity at the point E1 (where a line extended from the point D1 in the W direction intersected the cross-section Aj) was greater than 80 kA/m, for example, 187 kA/m.

Similarly, the difference between the coercivity of specimen A15' (2026 kA/m) and that of specimen A8' (1848 kA/m) was greater than 80 kA/m, for example, 178 kA/m.

Similarly, the difference between the coercivity of specimen B1' (2009 kA/m) and that of specimen B8' (1741 kA/m) was greater than 80 kA/m, for example, 268 kA/m.

Similarly, the difference between the coercivity of specimen B15' (1991 kA/m) and that of specimen B8' (1741 kA/m) was greater than 80 kA/m, for example, 250 kA/m.

In the W direction, the relationship between the coercivity y at a certain point of the rare earth permanent magnet and the position x of that point approximately satisfied the parabola $y = ax^2 + bx + c$, where $a > 0$, $b < 0$, and $c > 0$. Taking a point on the surface A1 of the rare earth permanent magnet as the origin of a planar Cartesian coordinate system, with the W direction as the x-axis and the H direction as the y-axis, x ranged from 0.1 to 20.

At the edge region (A1' to A15'), in the parabola, $a = 3.3$, $b = -52.5$, and $c = 2{,}064.0$; $R^2 = 0.9669$.

At the central region (B1' to B15'), in the parabola, $a = 5.0$, $b = -81.1$, $c = 2{,}063.9$; $R^2 = 0.9579$.

Example 1 - Motor

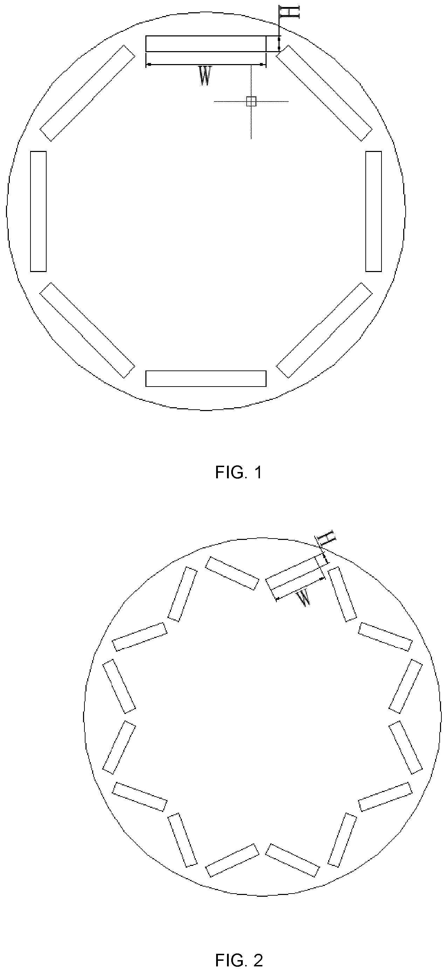

As shown in Fig. 1, eight rare earth permanent magnets from Preparation Example 1 were evenly arranged in a circumferential direction of motor rotation such that the rare earth permanent magnets were located on a regular octagon, with angles between each pair of the adjacent magnets being equal to each other.

Example 2 - Motor

As shown in Fig. 2, sixteen rare earth permanent magnets from Preparation Example 1 were divided into eight groups and arranged evenly in a circumferential direction of motor rotation such that the line connecting the more distant end faces of each group of the rare earth permanent magnets was located on a regular 8-sided polygon, and that the two rare earth permanent magnets in each group were arranged in a V shape, with angles between the two rare earth permanent magnets in each group of the rare earth permanent magnets being equal to each other.

Comparative Preparation Example 1 - Rare Earth Permanent Magnet

This example differed from Preparation Example 1 in that dysprosium (Dy), in place of terbium (Tb), was attached in a direction perpendicular to the $W_0$ direction. See below for more details.

The orientation direction of the initial sintered NdFeB magnet was denoted as an $H_0$ direction, and a direction of the width thereof was denoted as a $W_0$ direction. The $H_0$ direction was the same as the H direction of a resultant rare earth permanent magnet, and the $W_0$ direction was the same as the W direction of the resultant rare earth permanent magnet.

A heavy rare earth coating containing Dy was applied to each of two opposite surfaces of the initial sintered NdFeB magnet in a direction perpendicular to the $H_0$ direction to obtain a magnet A. Specifically, the initial sintered NdFeB magnet was placed in a spraying device with one (the one with the dimension 39 mm $\times$ 17.8 mm) of its surfaces being oriented upward, and preheated at 180 °C. A heavy rare earth coating containing Dy was applied to the one surface by spraying. The weight gain of Dy on the single surface was 0.325 wt%. The magnet was flipped, and a heavy rare earth coating containing Dy was applied to another surface (the surface opposite to the 39 mm $\times$ 17.8 mm surface) by spraying, resulting in a magnet A. The weight gain of Dy on the single surface was 0.325 wt%.

A heavy rare earth coating containing Dy was applied to each of two opposite surfaces of the magnet A in a direction perpendicular to the $W_0$ direction to obtain a magnet B". Specifically, the magnet A was preheated at 180 °C with one (the one with the dimension 39 mm $\times$ 4 mm) of its side surfaces being oriented upward. A heavy rare earth coating containing Dy was applied to the one side surface by spraying. The weight gain of Dy on the single surface was 0.4 wt%. The magnet was flipped, and a heavy rare earth coating containing Dy was applied to another side surface (the side surface opposite to the 39 mm $\times$ 4 mm side surface) by spraying, resulting in a magnet B". The weight gain of Dy on the single surface was 0.4 wt%.

The magnet B" was subjected to heat treatment to obtain a rare earth permanent magnet. Specifically, the magnet B" was heated to the first temperature of 100 °C and kept at 100 °C for 1 hour. Subsequently, the temperature was raised to the second temperature of 200 °C, and the magnet B" was kept at 200 °C for 1 hour. Then, the temperature was increased to the third temperature of 500 °C, and the magnet B" was kept at 500 °C for 1 hour. The temperature was further raised to the fourth temperature of 920 °C, and the magnet B" was kept at 920 °C for 12 hours. After the heating was stopped, the magnet B" was cooled with argon to a temperature of 50 °C or less. Then, the temperature was raised to the fifth temperature of 490 °C, and the magnet B" was kept at 490 °C for 5 hours. After the heating was stopped, the magnet B" was cooled with argon to a temperature of 50 °C or less, resulting in a rare earth permanent magnet.

Specimens were taken from the rare earth permanent magnet as shown in Figs. 3 and 4. Specimens A1" to A15" and specimens B1" to B15" were taken only from the sample at position 1. The testing results of these specimens are shown in Table 4.

Table 4

| Specimen No. | $Br$ (T) | $H_{cj}$ (kA/m) |
|---|---|---|
| A1" | 1.388 | 1785 |
| A2" | 1.384 | 1782 |
| A3" | 1.389 | 1791 |
| A4" | 1.391 | 1783 |
| A5" | 1.385 | 1788 |
| A6" | 1.388 | 1789 |
| A7" | 1.39 | 1779 |
| A8" | 1.383 | 1781 |
| A9" | 1.386 | 1773 |
| A10" | 1.381 | 1789 |
| A11" | 1.386 | 1773 |
| A12" | 1.389 | 1782 |
| A13" | 1.385 | 1793 |
| A14" | 1.391 | 1781 |
| A15" | 1.388 | 1788 |
| B1" | 1.403 | 1688 |
| B2" | 1.411 | 1681 |
| B3" | 1.408 | 1669 |
| B4" | 1.41 | 1681 |
| B5" | 1.399 | 1671 |
| B6" | 1.413 | 1665 |
| B7" | 1.411 | 1678 |
| B8" | 1.407 | 1677 |
| B9" | 1.409 | 1679 |
| B10" | 1.41 | 1682 |
| B11" | 1.415 | 1673 |
| B12" | 1.393 | 1681 |
| B13" | 1.408 | 1678 |
| B14" | 1.413 | 1684 |
| B15" | 1.405 | 1679 |

As is clear from Table 4, the coercivity of the rare earth permanent magnet did not gradually decrease from both ends toward the center in the W direction. Moreover, $H1 - H1'$, the difference between the coercivity of A1" (1785 kA/m) and that of A8" (1781 kA/m), was less than 80 kA/m. $Hn - Hn'$, the difference between the coercivity of A15" (1788 kA/m) and that of A8" (1781 kA/m), was also less than 80 kA/m. The difference between the coercivity of B1" (1688 kA/m) and that of B8" (1677 kA/m) was less than 80 kA/m. Likewise, the difference between the coercivity of B15" (1679 kA/m) and that of B8" (1677 kA/m) was less than 80 kA/m.

The coercivity distribution differed from that of the rare earth permanent magnet obtained in Preparation Example 1.

Comparative Example 1 - Motor

As shown in Fig. 1, eight rare earth permanent magnets from Comparative Preparation Example 1 were evenly arranged in a circumferential direction of motor rotation such that the rare earth permanent magnets were located on a regular octagon, with angles between each pair of the adjacent magnets being equal to each other.

Comparative Example 2 - Motor

As shown in Fig. 2, sixteen rare earth permanent magnets from Comparative Preparation Example 1 were divided into eight groups and arranged evenly in a circumferential direction of motor rotation such that the line connecting the more distant end faces of each group of the rare earth permanent magnets was located on a regular 8-sided polygon, and that the two rare earth permanent magnets in each group were arranged in a V shape, with angles between the two rare earth permanent magnets in each group of the rare earth permanent magnets being equal to each other.

The motors of Examples 1-2 and Comparative Examples 1-2 were tested for the back electromotive force $V_0$ at room temperature, and tested for the back electromotive force $V_t$ at room temperature after they had undergone high-temperature loading experimentation at 120 °C, 140 °C, and 160 °C. The decay ratio a of each of the motors was calculated by the following equation:

$$\alpha = （V_0 - V_t）/V_0 \times 100\%.$$

Results of the calculation are shown in Table 5.

Table 5

| No. | $\alpha$ (120°C) | $\alpha$ (140°C) | $\alpha$ (160°C) |
|---|---|---|---|
| Example 1 | 0.21 | 0.33 | 0.38 |
| Example 2 | 0.24 | 0.31 | 0.35 |
| Comp. Example 1 | 0.33 | 0.48 | 3.37 |
| Comp. Example 2 | 0.27 | 0.38 | 3.18 |

As is evident from the above tables, the coercivity of the rare earth permanent magnet of the present disclosure gradually decreases from both ends toward the center in the W direction (that is, the coercivity $H_{cj}$ decreases from the surface A1 to the surface Aj in the W direction, and the coercivity $H_{cj}$ decreases from the surface An to the cross-section Aj in the W direction). In addition, when *H1 - H1'* is greater than 80 kA/m and *Hn - Hn'* is greater than 80 kA/m, the motor exhibits lower high-temperature decay and higher resistance to demagnetization.

The present disclosure is not limited to the embodiments described above. Any variation, improvement, and replacement which do not depart from the essence of the present disclosure and which those skilled in the art are able to think of fall within the scope of the present disclosure.

**Claims**

1. A rare earth permanent magnet of a cuboid structure with length, width, and height, wherein when a direction of the height is defined as an H direction, which is the easy axis of magnetization of the rare earth permanent magnet, and a direction of the width is defined as a W direction; and

   when the cuboid structure has a surface A1 and a surface An that are parallel to each other and formed by the length and the height of the cuboid structure, and a plurality of cross-sections Ai parallel to the surface A1 exist between the surface A1 and the surface An, of which the cross-section located at the central axis of the cuboid structure is denoted as Aj,
   then the coercivity $H_{cj}$ decreases from the surface A1 to the cross-section Aj in the W direction, and the coercivity $H_{cj}$ decreases from the surface An to the cross-section Aj in the W direction;
   wherein when the coercivity at a certain point D1 on the surface A1 is denoted as H1; and when a line extended from the point D1 in the W direction intersects the cross-section Aj at a point E1, and the coercivity at the point E1 is denoted as *H1'*, then it follows that *H1 - H1'* > 80 kA/m; and
   wherein when the coercivity at a certain point Dn on the surface An is denoted as *Hn;* and when a line extended from the point Dn in the W direction intersects the cross-section Aj at a point En, and the coercivity at the point En is denoted as *Hn',* then it follows that *Hn - Hn' > 80 kA/m.*

2. The rare earth permanent magnet according to claim 1, wherein the amount of a rare earth RE in the rare earth permanent magnet is 28-34 wt%, and the RE is a light rare earth element and a heavy rare earth element, wherein the light rare earth element must include Nd, and the heavy rare earth element is selected from one or more of the group consisting of Dy, Tb, Gd, Ho, and Y

3. The rare earth permanent magnet according to claim 2, wherein the light rare earth element is selected from one or more of the group consisting of Pr, Nd, La, and Ce, and must include Nd, while the heavy rare earth element is Dy and Tb.

4. The rare earth permanent magnet according to any of claims 1 - 3, where in the W direction, the relationship between the coercivity y at a certain point of the rare earth permanent magnet and the position x of that point approximately satisfies the parabola $y = ax^2 + bx + c$, where $a > 0$, $b < 0$, and $c > 0$.

5. A method of manufacturing the rare earth permanent magnet according to any one of claims 1 to 4, which comprises:

   1) providing an initial sintered NdFeB magnet of a cuboid structure, wherein a direction of height of the initial sintered NdFeB magnet is denoted as an $H_0$ direction, and a direction of width thereof is denoted as a $W_0$ direction, and wherein the $H_0$ direction is the same as the H direction of the rare earth permanent magnet, and the $W_0$ direction is the same as the W direction of the rare earth permanent magnet;
   2) applying a heavy rare earth coating containing Dy to each of two opposite surfaces of the initial sintered NdFeB magnet in a direction perpendicular to the $H_0$ direction to obtain a magnet A;
   3) applying a heavy rare earth coating containing Tb to each of two opposite side surfaces of the magnet A in a direction perpendicular to the $W_0$ direction to obtain a magnet B; and
   4) subjecting the magnet B to heat treatment to obtain the rare earth permanent magnet.

6. The method of according to claim 5, wherein the initial sintered NdFeB magnet has $R_2Fe_{14}B$ as the main phase.

7. The method according to any of claims 5 - 6, wherein the initial sintered NdFeB magnet in step (1) further contains another element M, the other element M being selected from two or more of the group consisting of Cu, Co, Ga, Ti, Zr, Mo, and Nb.

8. The method according to any of claims 5 - 7, wherein the weight gain of Dy in step (2) ranges from 0.4 wt% to 1.5 wt%.

9. The method according to any of claims 5 - 8, wherein the weight gain of Tb in step (3) ranges from 0.05 wt% to 0.5 wt%.

10. An electric motor, comprising the rare earth permanent magnets according to any one of claims 1 to 4, wherein the rare earth permanent magnets are disposed in any one of the following manners:

    (1) N of the rare earth permanent magnets are arranged evenly in a circumferential direction of motor rotation such that the rare earth permanent magnets are located on a regular N-sided polygon with angles between each pair of the adjacent rare earth permanent magnets being equal to each other, wherein N is a positive integer greater than or equal to 3;
    (2) 2M of the rare earth permanent magnets are divided into M groups and arranged evenly in a circumferential direction of motor rotation such that the line connecting the more distant end faces of each group of the rare earth permanent magnets is located on a regular M-sided polygon, and that the two rare earth permanent magnets in each group of the rare earth permanent magnets are arranged in a V shape, with angles between the two rare earth permanent magnets in each group of the rare earth permanent magnets being equal to each other, wherein M is a positive integer greater than or equal to 8;
    (3) 3P of the rare earth permanent magnets are divided into P groups and arranged evenly in a circumferential direction of motor rotation such that the three magnets in each group of the rare earth permanent magnets form an isosceles triangle and the magnet serving as the base of the isosceles triangle is located on a regular P-sided polygon, wherein P is a positive integer greater than or equal to 8; and
    (4) 4Q of the rare earth permanent magnets are divided into Q groups and arranged evenly in a circumferential direction of motor rotation such that the four rare earth permanent magnets in each group of the rare earth permanent magnets form two parallel V shapes, and that the line connecting the more distant end faces of the two magnets forming the V shape in each group of the rare earth permanent magnets is located on a regular Q-sided polygon, wherein Q is a positive integer greater than or equal to 6.

FIG. 1

FIG. 2

Position 1    Position 2    Position 3

17.8mm

39mm

FIG. 3

A1    A8    A15

H direction

B1    B8    B15    4mm

C1    C8    C15

17.8mm

W direciton

FIG. 4

**y**

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113506665 A
- CN 117497276 A

- CN 115602402 A